# EUROPÄISCHE PATENTANMELDUNG

(11) **EP 4 596 905 A1**
(43) Veröffentlichungstag der Anmeldung: **06.08.2025**
(21) Anmeldenummer: 25153103.4
(22) Anmeldetag: 21.01.2025
(51) Int. Cl.: F16B 33/06, F16B 33/00, F16B 43/00

(54) **SCHRAUBVERBINDUNGSANORDNUNG**

(30) Priorität: 05.02.2024 DE 102024103142
(71) Anmelder: R&D Engineering A/S, 8382 Hinnerup (DK)
(72) Erfinder: NIELSEN, Flemming Selmer, 8382 Hinnerup (DK)
(74) Vertreter: Meissner Bolte Partnerschaft mbB

(57) **Zusammenfassung**

Die Erfindung betrifft ein Schraubverbindungsanordnung, welche eine Schraube (4) aufweist, welche einen Schraubenkörper mit einem Schraubenschaft (5) aufweist, der zumindest abschnittsweise mit einem Gewinde, insbesondere Außengewinde (7), versehen ist. Die Schraubverbindungsanordnung weist ferner eine als Gegenstück zu der Schraube (4) dienende und/oder ausgebildete Schraubenmutter auf, welche einen Mutterkörper (8) mit einem zu dem Gewinde des Schraubenschafts (5) korrespondierenden Gewinde, insbesondere Innengewinde, aufweist und auf den Schraubenschaft (5) aufgeschraubt oder aufschraubbar ist. Erfindungsgemäß ist insbesondere vorgesehen, dass der Mutterkörper (8) der Schraubenmutter zumindest teil- oder bereichsweise mit einer Schicht (9), insbesondere Beschichtung, versehen ist, welche in tribologischer Weise einen Reibungskoeffizienten zwischen dem Mutterkörper (8) der Schraubenmutter und einer im montierten Zustand der Schraubverbindungsanordnung mit dem Mutterkörper (8) der Schraubenmutter in Kontakt kommenden Oberfläche erhöht.

## Beschreibung

Die vorliegende Erfindung betrifft eine Schraubverbindungsanordnung. Die Schraubverbindungsanordnung eignet sich insbesondere zum Verbinden von Komponenten von Großanlagen, beispielsweise Windkraftanlagen, Fassadenelementen oder Offshore-Anlagen.

Die Schraubverbindungsanordnung weist eine Schraube und eine als Gegenstück zu der Schraube dienende und/oder ausgebildete Schraubenmutter auf. Die Schraube weist einen Schraubenkörper mit einem Schraubenschaft auf, der zumindest abschnittsweise mit einem Gewinde, insbesondere Außengewinde, versehen ist.

Die als Gegenstück zu der Schraube dienende und/oder ausgebildete Schraubenmutter weist einen Mutterkörper mit einem zu dem Gewinde des Schraubenschafts korrespondierenden Gewinde, insbesondere Innengewinde, auf und ist auf den Schraubenschaft aufgeschraubt oder aufschraubbar.

Unter dem hierin verwendeten Begriff "Schraube" ist allgemein ein Befestigungselement mit Außen- oder Innengewinde zu verstehen, welches zum Einführen durch die Löcher in zusammengebauten Teilen bestimmt ist und normalerweise zum Festziehen oder Lösen durch Anziehen einer Mutter vorgesehen ist.

Insbesondere handelt es sich bei einer Schraube im Sinne der vorliegenden Erfindung um einen zylindrischen oder leicht kegeligen (konischen) Körper, in dessen Oberfläche vorzugsweise ein Gewinde (Außengewinde) eingeschnitten oder eingewalzt ist. Eine mit einer Schraube hergestellte Verbindung ist in der Regel reversibel und lösbar.

Eine "Schraubenmutter" im Sinne der vorliegenden Erfindung ist als das entsprechende Gegenstück einer Schraube zu verstehen, das mit einem Innengewinde oder Außengewinde versehen ist.

Schraubenanordnungen mit einer Schraube und einer Schraubenmutter werden in verschiedenen Anwendungsbereichen eingesetzt, um Bauteile lösbar miteinander zu verbinden. Üblicherweise sind Schraubenanordnungen mit Unterlegscheiben versehen, die Scheibenkörper aufweisen und auf den Schraubenschaft aufgeschoben oder aufschiebbar sind.

Unterlegscheiben sind ringförmige, über den Schraubenschaft einer Schraube stülpbare und meist aus Metall bestehende Scheiben. Zwischen dem Schraubenkopf und dem mit der Schraube zu befestigenden Teil beigelegt dient eine Unterlegscheibe dazu, die von der Unt
erseite des Schraubenkopfs ausgehende Kraft auf eine größere Fläche dieses Teils, dessen Werkstoff meist weniger fest als der der Schraube ist, zu übertragen. Bei durchgehenden Metallschrauben wird auch unter der Mutter eine Unterlegscheibe angebracht.

Wegen ihres größeren Durchmessers bleibt die Unterlegscheibe beim Anziehen der Schraube oder der Schraubenmutter auf dem zu befestigenden Teil liegen. Das Gleiten findet zwischen ihr und dem Schraubenkopf bzw. der Schraubenmutter statt, und die Oberfläche des Teils kann nicht durch Reiben verletzt werden.

Der Erfindung liegt die Problemstellung zu Grunde, dass zum Montieren einer Schraubverbindungsanordnung in der Regel zwei Werkzeuge benötigt werden, nämlich ein erstes Werkzeug, welches passend für einen Formschluss mit einem Schraubenkopf der Schraube ausgebildet ist, und ein zweites Werkzeug, welches passend für einen Formschluss mit der Schraubenmutter der Schraubverbindungsanordnung ausgebildet ist. Diese beiden Werkzeuge sind entsprechend zu halten, was in der Regel manuell erfolgt, während ein Werkzeug relativ zu dem anderen gedreht wird, um so die Schraubenmutter auf den Schraubenschaft der Schraube aufzuschrauben und die Schraube somit zu fixieren.

Häufig sind jedoch Schraubverbindungsanordnungen in Bereichen vorzusehen, die nicht oder nur mit Aufwand mit entsprechenden Werkzeugen erreicht werden können.

Somit liegt der Erfindung die Aufgabe zu Grunde, eine Schraubverbindungsanordnung der eingangs genannten Art dahingehend weiterzubilden, dass diese in einer einfach zu realisierenden Weise montiert werden kann, insbesondere auch in schwer zugänglichen Bereichen.

Darüber hinaus soll nach wie vor die Schraubverbindungsanordnung sicher und zuverlässig fixierbar sein.

Gemäß einem Aspekt der vorliegenden Erfindung wird die zu Grunde liegende Aufgabe durch eine Schraubverbindungsanordnung gelöst, welche eine Schraube und eine als Gegenstück zu der Schraube dienende und/oder ausgebildete Schraubenmutter aufweist, wobei die Schraube einen Schraubenkörper mit einem Schraubenschaft aufweist, der zumindest abschnittsweise mit einem Gewinde, insbesondere Außengewinde, versehen ist. Die als Gegenstück zu der Schraube dienende und/oder ausgebildete Schraubenmutter weist einen Mutterkörper mit einem zu dem Gewinde des Schraubenschafts korrespondierenden Gewinde, insbesondere Innengewinde auf und ist auf den Schraubenschaft aufgeschraubt oder aufschraubbar.

Gemäß dem ersten Aspekt der vorliegenden Erfindung ist vorgesehen, dass der Mutterkörper der Schraubenmutter zumindest teil- oder bereichsweise mit einer Schicht, insbesondere Beschichtung, versehen ist, welche in tribologischer Weise einen Reibungskoeffizienten zwischen dem Mutterkörper der Schraubenmutter und einer im montierten Zustand der Schraubverbindungsanordnung mit dem Mutterkörper der Schraubenmutter in Kontakt kommenden Oberfläche erhöht, wobei eine mittlere Dicke der Schicht in einem Bereich zwischen 150 µm und 3µm liegt.

Gemäß einem weiteren (zweiten) Aspekt wird die der Erfindung zu Grunde liegende Aufgabe durch eine Schraubverbindungsanordnung mit einer Schraube und einer als Gegenstück zu der Schraube dienenden und/oder ausgebildeten Schraubenmutter gelöst, wobei die Schraubverbindungsanordnung ferner mindestens eine und vorzugsweise zwei Unterlegscheiben aufweist, welche einen Scheibenkörper aufweist/aufweisen und auf den Schraubenschaft des Schraubenkörpers aufgeschoben oder aufschiebbar ist/sind.

Erfindungsgemäß ist bei dem zweiten Aspekt der vorliegenden Erfindung insbesondere vorgesehen, dass der Scheibenkörper der mindestens einen Unterlegscheibe, die im montierten Zustand der Schraubverbindungsanordnung mit dem Mutterkörper der Schraubenmutter in Kontakt kommt, und/oder eine Oberfläche des Mutterkörpers der Schraubenmutter, die im montierten Zustand der Schraubverbindungsanordnung mit dem Scheibenkörper der mindestens einen Unterlegscheibe in Kontakt kommt, zumindest teil- oder bereichsweise mit einer Schicht, insbesondere Beschichtung, versehen sind/ist, welche in tribologischer Weise einen Reibungskoeffizienten zwischen dem Mutterkörper und dem Scheibenkörper der mindestens einen Unterlegscheibe erhöht, wobei eine mittlere Dicke der Schicht in einem Bereich zwischen 150 µm und 3µm liegt.

Gemäß Weiterbildungen des zweiten Aspekts der Erfindung ist vorgesehen, dass der Schraubenkörper der Schraube zum zumindest teil- oder bereichsweisen Einführen in ein Durchgangsloch in mindestens ein Bauteil bestimmt ist.

Bei dieser Ausführungsvariante ist erfindungsgemäß vorgesehen, dass Scheibenkörper der mindestens einen Unterlegscheibe, die im montierten Zustand der Schraubverbindungsanordnung mit dem Mutterkörper der Schraubenmutter in Kontakt kommt, zumindest teil- oder bereichsweise mit einer Schicht, insbesondere Beschichtung, versehen ist, welche in tribologischer Weise einen Reibungskoeffizienten zwischen dem Scheibenkörper der mindestens einen Unterlegscheibe und dem Bauteil erhöht, wobei eine mittlere Dicke der Schicht in einem Bereich zwischen 150 µm und 3µm liegt.

Alternativ oder zusätzlich zu dieser Ausführungsvariante ist vorgesehen, dass die Schraube einen Schraubenkopf aufweist.

Bei dieser Ausführungsvariante ist insbesondere vorgesehen, dass der Scheibenkörper der mindestens einen Unterlegscheibe, die im montierten Zustand der Schraubverbindungsanordnung mit dem Schraubenkopf der Schraube in Kontakt kommt, zumindest teil- oder bereichsweise mit einer Schicht, insbesondere Beschichtung, versehen ist, welche in tribologischer Weise einen Reibungskoeffizienten zwischen dem Schraubenkopf und dem Scheibenkörper der mindestens einen Unterlegscheibe erhöht, wobei eine mittlere Dicke der Schicht in einem Bereich zwischen 150 µm und 3µm liegt.

Alternativ oder zusätzlich hierzu ist es aber auch denkbar, dass der Schraubenkopf der Schraube zumindest teil- oder bereichsweise mit einer Schicht, insbesondere Beschichtung, versehen ist, welche in tribologischer Weise einen Reibungskoeffizienten zwischen dem Schraubenkopf der Schraube und einer im montierten Zustand der Schraubverbindungsanordnung mit dem Schraubenkopf der Schraube in Kontakt kommenden Oberfläche erhöht, wobei eine mittlere Dicke der Schicht in einem Bereich zwischen 150 µm und 3µm liegt.

Gemäß noch einer weiteren Ausführungsvariante der erfindungsgemäßen Schraubverbindungsanordnung ist vorgesehen, dass der Schraubenkörper der Schraube zum zumindest teil- oder bereichsweisen Einführen in ein Durchgangsloch in mindestens ein Bauteil bestimmt ist, wobei ferner die Schraube einen Schraubenkopf aufweist.

Erfindungsgemäß ist in diesem Zusammenhang insbesondere vorgesehen, dass der Scheibenkörper der mindestens einen Unterlegscheibe, die im montierten Zustand der Schraubverbindungsanordnung mit dem Schraubenkopf der Schraube in Kontakt kommt, zumindest teil- oder bereichsweise mit einer Schicht, insbesondere Beschichtung, versehen ist, welche in tribologischer Weise einen Reibungskoeffizienten zwischen dem Bauteil und dem Scheibenkörper der mindestens einen Unterlegscheibe erhöht, wobei eine mittlere Dicke der Schicht in einem Bereich zwischen 150 µm und 3µm liegt.

Alle zuvor genannten Ausführungsvarianten der vorliegenden Erfindung haben gemeinsam, dass ein neuartiges tribologisches System zum Einsatz kommt, mit welchem bewusst ein Reibungskoeffizient zwischen einer Komponente der Schraubverbindungsanordnung, wie beispielsweise dem Mutterkörper der Schraubenmutter, den Unterlegscheiben, der Oberfläche des Bauteils oder dem Schraubenkopf, zu erhöhen.

Die Schicht des tribologischen Systems übernimmt somit die Aufgabe eines Abradentens, was ein Gegenteil eines Schmiermittels ist. Mit anderen Worten, an Stelle einer in der Regel gewünschten und erforderlichen Schmierung zwischen zwei Bauteilen kommt erfindungsgemäß ein Mittel zum Einsatz, um Reibung zwischen zwei Komponenten der Schraubverbindungsanordnung ("Reibpartnern"), die sich zumindest beim Montieren der Schraubverbindungsanordnung relativ zueinander bewegen, zu erhöhen.

Die insbesondere als Beschichtung und insbesondere als ein tribologisches System ausgeführte Schicht ist insbesondere ausgebildet, den Reibungskoeffizienten zwischen den sich bei der Montage der Schraubverbindungsanordnung relativ zueinander bewegenden Komponenten um mindestens 100%, vorzugsweise um mindestens 150% und noch bevorzugter um etwa 200% bis 300% zu erhöhen.

Mit dieser Maßnahme ist die Montage der Schraubverbindungsanordnung wesentlich vereinfacht, da die als Gegenstück zu der Schraube dienende und/oder ausgebildete Schraubenmutter bei der Montage der Schraubverbindungsanordnung, das heißt beim Aufschrauben auf den Schraubenschaft des Schraubenkörpers der Schraube nicht oder nur mit einem reduzierten Kraftaufwand gehalten werden muss.

Zur Realisierung der insbesondere als Beschichtung und insbesondere als ein tribologisches System ausgeführten Schicht ist vorgesehen, dass diese mindestens ein insbesondere als Abradent dienendes Schleifmittel aufweist.

Das insbesondere als Abradent dienende Schleifmittel kann Hartstoffkörner auf Grundlage natürlicher Kornwerkstoffe und/oder Hartstoffkörner auf Grundlage synthetischer Kornwerkstoffe aufweisen. Insbesondere bieten sich hierbei Kornwerkstoffe aus Flint, Quarz, Korund, Schmiergel, Granat oder Kornwerkstoffe auf Grundlage von Wolframkarbide, Nickelkarbide, Siliciumcarbid, Chromoxid, (kubisches) Bornitrid, Aluminiumoxid und/oder Diamant an.

Die als ein tribologisches System dienende Schicht kann als ein Pulver, als eine Paste, insbesondere Einschleifpaste, oder als ein Matrix-System, insbesondere auf Epoxy-Basis, ausgeführt sein. Insbesondere bietet es sich in diesem Zusammenhang an, dass die als tribologisches System ausgeführte Schicht als ein in eine Matrix eingebetteter Verbundwerkstoff ausgebildet ist.

Vorzugsweise kann das als tribologisches System ausgeführte Schleifmittel nachträglich auf Komponenten der Schraubverbindungsanordnung aufgebracht werden. Denkbar ist es beispielsweise, dass die ausgeführte Schicht durch Tauch-Schleudern, Spritzen, Tauch-Ziehen und/oder Aufpinseln aufgebracht ist oder aufbringbar ist.

Gemäß bevorzugten Realisierungen der erfindungsgemäßen Schraubverbindungsanordnung besteht der Schraubenkörper und/oder der Scheibenkörper der mindestens einen Unterlegscheibe und/oder der Mutterkörper aus Metall, insbesondere Stahl, bevorzugt hochlegiertem Stahl, Messing, Aluminium und/oder Kupfer.

Insbesondere weist der Schraubenkopf der Schraube einen Drehantrieb mit einer Kontur auf, welche passend für einen Formschluss mit einem insbesondere als Schraubenzieher, Schraubendreher, Schraubenschlüssel oder Bit ausgeführten Werkzeug ausgebildet ist.

In gleicher Weise sollte die Schraubenmutter einen Drehantrieb mit einer Kontur aufweisen, welche passend für einen Formschluss mit einem insbesondere als Schraubendreher, Schraubenschlüssel oder Bit ausgeführten Werkzeug ausgebildet ist.

Die vorliegende Erfindung betrifft ferner ein System mit mindestens einem Bauteil, in welchem ein Durchgang, insbesondere Durchgangsloch, ausgebildet ist, und mit einer Schraubverbindungsanordnung der zuvor genannten erfindungsgemäßen Art, wobei der Schraubenkörper der Schraube der Schraubverbindungsanordnung zumindest teil- oder bereichsweise in dem Durchgang eingeführt ist.

Das Bauteil besteht insbesondere aus Metall, insbesondere Stahl, bevorzugt hochlegiertem Stahl, Messing, Aluminium und/oder Kupfer, wobei allerdings auch Verbundwerkstoffe, insbesondere Kunststoff-Verbundwerkstoffe, denkbar sind.

Schließlich betrifft die Erfindung eine Komposition, insbesondere in Gestalt eines Pulvers oder in Gestalt einer Paste, welche als ein tribologisches System zur Erhöhung eines Reibungskoeffizienten zwischen Komponenten einer Schraubverbindungsanordnung der zuvor genannten erfindungsgemäßen Art und/oder zur Erhöhung eines Reibungskoeffizienten zwischen mindestens einer Komponente einer Schraubverbindungsanordnung der zuvor genannten erfindungsgemäßen Art und einem Bauteil ausgebildet ist.

Die Komposition weist dabei insbesondere mindestens ein als Abradent dienendes Schleifmittel auf, wobei das Schleifmittel Hartstoffkörner auf Grundlage natürlicher oder synthetischer Kornwerkstoffe umfasst.

Gemäß einem weiteren Aspekt der Erfindung betrifft diese eine Schraubverbindungsanordnung, welche lediglich eine Schraube aufweist, welche einen Schraubenkörper mit einem Schraubenschaft aufweist, der zumindest abschnittsweise mit einem Gewinde, insbesondere Außengewinde, versehen ist, wobei erfindungsgemäß vorgesehen ist, dass die Schraube und insbesondere ein Schraubenkopf der Schraube, der Schraubenschaft und/oder das Gewinde des Schraubenschafts zumindest teil- oder bereichsweise mit der zuvor beschriebenen Schicht, insbesondere Beschichtung, versehen ist, welche in tribologischer Weise einen Reibungskoeffizienten zwischen der Schraube und einer im montierten Zustand der Schraubverbindungsanordnung mit der Schraube in Kontakt kommenden Oberfläche erhöht, wobei eine mittlere Dicke der Schicht in einem Bereich zwischen 150 µm und 3µm liegt.

Nachfolgend wird unter Bezugnahme auf die beiliegende Zeichnung eine exemplarische Ausführungsform der Erfindung näher beschrieben.

Es zeigt:

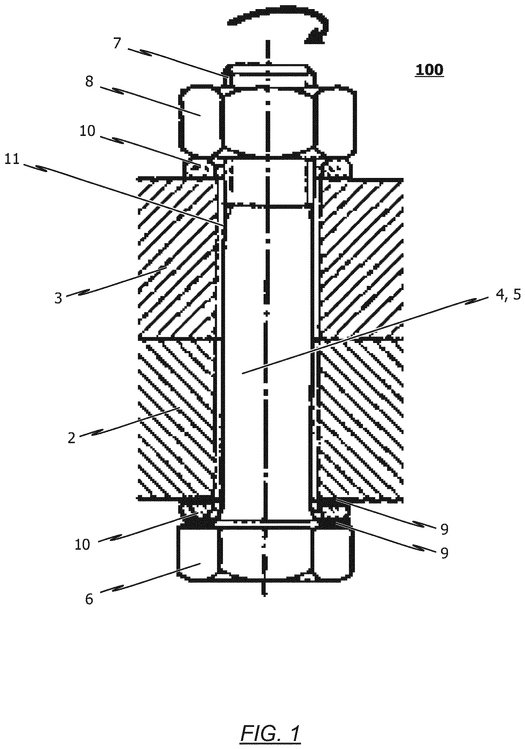

- FIG. 1: eine exemplarische Ausführungsform der erfindungsgemäßen Schraubverbindungsanordnung im montierten Zustand.

In FIG. 1 ist eine exemplarische Ausführungsform des erfindungsgemäßen Systems 100 gezeigt. Das System 100 umfasst zwei miteinander zu verbindende Bauteile 2, 3, in denen ein Durchgangsloch 11 ausgebildet ist.

Zum Verbinden der Bauteile 2,3 kommt eine Schraubverbindungsanordnung zum Einsatz.

Die Schraubverbindungsanordnung weist eine Schraube 4 auf, welche einen Schraubenkörper mit einem Schraubenschaft 5 aufweist, der abschnittsweise mit einem Außengewinde 7 versehen ist.

Die Schraubverbindungsanordnung weist ferner eine als Gegenstück zu der Schraube 4 dienende und/oder ausgebildete Schraubenmutter auf, welche einen Mutterkörper 8 mit einem zu dem Gewinde des Schraubenschafts 5 korrespondierenden Innengewinde aufweist und auf den Schraubenschaft 5 der Schraube 4 aufgeschraubt ist.

Die Schraubverbindungsanordnung weist ferner zwei Unterlegscheiben auf, die jeweils einen Scheibenkörper 10 aufweisen und auf den Schraubenschaft 5 des Schraubenkörpers aufgeschoben sind.

Dabei ist eine erste Unterlegscheibe zwischen einem Schraubenkopf der Schraube 4 und einem ersten der beiden miteinander zu verbindenden Bauteile 2 angeordnet, während die zweite Unterlegscheibe zwischen dem Mutterkörper 8 der als Gegenstück zu der Schraube 4 dienenden Schraubenmutter und dem zweiten Bauteil 3 angeordnet ist.

Die erfindungsgemäße Schraubverbindungsanordnung, wie sie bei der exemplarischen Ausführungsform des in FIG. 1 gezeigten Systems 100 zum Einsatz kommt, zeichnet sich insbesondere durch ein tribologisches System zum Erhöhen eines Reibungskoeffizienten zwischen dem Schraubenkopf 6 der Schraube 4 und der Unterlegscheibe aus, die in dem gezeigten montierten Zustand der Schraubverbindungsanordnung mit dem Mutterkörper 8 der Schraubenmutter in Kontakt kommt.

Das tribologische System ist als eine Schicht 9, insbesondere Beschichtung ausgeführt, welche in tribologischer Weise den Reibungskoeffizienten zwischen dem Scheibenkörper 10 der Unterlegscheibe und dem Schraubenkopf 6 der Schraube 4 erhöht.

Zusätzlich ist bei der in FIG. 1 gezeigten exemplarischen Ausführungsform des erfindungsgemäßen Systems 100 vorgesehen, dass zwischen dem Scheibenkörper 10 der Unterlegscheibe, die dem Schraubenkopf 6 der Schraube 4 zugeordnet ist, und dem Bauteil eine in tribologischer Hinsicht wirkende Schicht 9 zur Erhöhung des Reibungskoeffizientens vorgesehen ist.

Die Schicht 9 ist insbesondere als Beschichtung ausgeführt und erhöht den entsprechenden Reibungskoeffizienten um vorzugsweise etwa 200% bis 300%.

Hierzu weist die insbesondere als ein tribologisches System dienende Schicht 9 mindestens ein als Abradent dienendes Schleifmittel auf.

Bei dem als Abradent dienenden Schleifmittel handelt es sich vorzugsweise um Hartstoffkörner auf Grundlage natürlicher oder synthetischer Kornwerkstoffe, insbesondere um Wolframkarbide, Nickelkarbide und/oder Siliciumcarbid.

In diesem Zusammenhang ist es denkbar, dass die in tribologischer Weise dienende Schicht 9 als Beschichtung auf die entsprechenden Komponenten aufgebracht ist.

Denkbar ist es beispielsweise, dass die Schicht 9 als ein Pulver, als eine Paste, insbesondere Einschleifpaste, oder als ein Matrix-System insbesondere auf Epoxy-Basis, ausgeführt ist.

Die insbesondere als Beschichtung ausgeführte Schicht 9 kann durch Tauch-Schleudern, Spritzen, Tauch-Ziehen und/oder Aufpinseln zumindest bereichsweise auf die entsprechenden Komponenten der Schraubverbindungsanordnung aufgebracht sein.

Zu erkennen ist ferner, dass der Schraubenkopf 6 der Schraube 4 einen Drehantrieb mit einer Kontur aufweist, welche passend für einen Formschluss mit einem insbesondere als Schraubenschlüssel oder einem als Bit ausgeführten Werkzeug ausgebildet ist.

In gleicher Weise weist die Schraubenmutter einen Drehantrieb mit einer Kontur auf, welche passend für einen Formschluss mit insbesondere einem als Schraubenschlüssel oder als Bit ausgeführten Werkzeug ausgebildet ist.

Die Erfindung ist nicht auf das in FIG. 1 gezeigte Ausführungsbeispiel beschränkt, sondern ergibt sich aus einer Zusammenschau sämtlicher hierin offenbarter Merkmale.

### Bezugszeichenliste

- 1: System
- 2: erstes Bauteil
- 3: zweites Bauteil
- 4: Schraube
- 5: Schraubenschaft
- 6: Schraubenkopf
- 7: Außengewinde
- 8: Schraubenmutter/Mutterkörper
- 9: Schicht
- 10: Unterlegscheibe/Scheibenkörper
- 11: Durchgangsloch

- 100: System

## Patentansprüche

1. Schraubverbindungsanordnung, welche Folgendes aufweist:
- eine Schraube (4), welche einen Schraubenkörper mit einem Schraubenschaft (5) aufweist, der zumindest abschnittsweise mit einem Gewinde, insbesondere Außengewinde (7), versehen ist,
**dadurch gekennzeichnet, dass**
die Schraube (4) und insbesondere ein Schraubenkopf (6) der Schraube (4), der Schraubenschaft (5) und/oder das Gewinde des Schraubenschafts zumindest teil- oder bereichsweise mit einer Schicht (9), insbesondere Beschichtung, versehen ist, welche in tribologischer Weise einen Reibungskoeffizienten zwischen der Schraube (4) und einer im montierten Zustand der Schraubverbindungsanordnung mit der Schraube (4) in Kontakt kommenden Oberfläche erhöht, wobei eine mittlere Dicke der Schicht in einem Bereich zwischen 150 µm und 3µm liegt.

2. Schraubverbindungsanordnung nach Anspruch 1 oder nach dem Oberbegriff von Anspruch 1, wobei die Schraubverbindungsanordnung ferner eine als Gegenstück zu der Schraube (4) dienende und/oder ausgebildete Schraubenmutter aufweist, welche einen Mutterkörper (8) mit einem zu dem Gewinde des Schraubenschafts (5) korrespondierenden Gewinde, insbesondere Innengewinde, aufweist und auf den Schraubenschaft (5) aufgeschraubt oder aufschraubbar ist,
**dadurch gekennzeichnet, dass**
der Mutterkörper (8) der Schraubenmutter zumindest teil- oder bereichsweise mit einer Schicht (9), insbesondere Beschichtung, versehen ist, welche in tribologischer Weise einen Reibungskoeffizienten zwischen dem Mutterkörper (8) der Schraubenmutter und einer im montierten Zustand der Schraubverbindungsanordnung mit dem Mutterkörper (8) der Schraubenmutter in Kontakt kommenden Oberfläche erhöht, wobei eine mittlere Dicke der Schicht in einem Bereich zwischen 150 µm und 3µm liegt.

3. Schraubverbindungsanordnung nach Anspruch 2 oder nach dem Oberbegriff von Anspruch 2, wobei die Schraubverbindungsanordnung ferner mindestens eine und vorzugsweise zwei Unterlegscheiben aufweist, welche einen Scheibenkörper (10) aufweist/aufweisen und auf den Schraubenschaft (5) des Schraubenkörpers aufgeschoben oder aufschiebbar ist/sind,
**dadurch gekennzeichnet, dass**
der Scheibenkörper (10) der mindestens einen Unterlegscheibe, die im montierten Zustand der Schraubverbindungsanordnung mit dem Mutterkörper (8) der Schraubenmutter in Kontakt kommt, und/oder eine Oberfläche des Mutterkörpers der Schraubenmutter, die im montierten Zustand der Schraubverbindungsanordnung mit dem Scheibenkörper (10) der mindestens einen Unterlegscheibe in Kontakt kommt, zumindest teil- oder bereichsweise mit einer Schicht (9), insbesondere Beschichtung, versehen sind/ist, welche in tribologischer Weise einen Reibungskoeffizienten zwischen dem Mutterkörper (8) und dem Scheibenkörper (10) der mindestens einen Unterlegscheibe erhöht, wobei eine mittlere Dicke der Schicht in einem Bereich zwischen 150 µm und 3µm liegt.

4. Schraubverbindungsanordnung nach Anspruch 3 oder nach dem Oberbegriff von Anspruch 3, wobei der Schraubenkörper der Schraube (4) zum zumindest teil- oder bereichsweisen Einführen in ein Durchgangsloch (11) in mindestens ein Bauteil (2, 3) bestimmt ist,
**dadurch gekennzeichnet, dass**
der Scheibenkörper (10) der mindestens einen Unterlegscheibe, die im montierten Zustand der Schraubverbindungsanordnung mit dem Mutterkörper (8) der Schraubenmutter in Kontakt kommt, zumindest teil- oder bereichsweise mit einer Schicht (9), insbesondere Beschichtung, versehen ist, welche in tribologischer Weise einen Reibungskoeffizienten zwischen dem Scheibenkörper (10) der mindestens einen Unterlegscheibe und dem Bauteil (2, 3) erhöht, wobei eine mittlere Dicke der Schicht in einem Bereich zwischen 150 µm und 3µm liegt.

5. Schraubverbindungsanordnung nach Anspruch 3 oder 4 oder nach dem Oberbegriff von Anspruch 3, wobei die Schraube (4) einen Schraubenkopf (6) aufweist,
**dadurch gekennzeichnet, dass**
der Scheibenkörper (10) der mindestens einen Unterlegscheibe, die im montierten Zustand der Schraubverbindungsanordnung mit dem Schraubenkopf (6) der Schraube (4) in Kontakt kommt, zumindest teil- oder bereichsweise mit einer Schicht (9), insbesondere Beschichtung, versehen ist, welche in tribologischer Weise einen Reibungskoeffizienten zwischen dem Schraubenkopf (6) und dem Scheibenkörper (10) der mindestens einen Unterlegscheibe erhöht, wobei eine mittlere Dicke der Schicht in einem Bereich zwischen 150 µm und 3µm liegt.

6. Schraubverbindungsanordnung nach einem der Ansprüche 1 bis 5 oder nach dem Oberbegriff von Anspruch 2, wobei die Schraube (4) einen Schraubenkopf (6) aufweist,
**dadurch gekennzeichnet, dass**
der Schraubenkopf (6) der Schraube (4) zumindest teil- oder bereichsweise mit einer Schicht (9), insbesondere Beschichtung, versehen ist, welche in tribologischer Weise einen Reibungskoeffizienten zwischen dem Schraubenkopf (6) der Schraube (4) und einer im montierten Zustand der Schraubverbindungsanordnung mit dem Schraubenkopf (6) der Schraube (4) in Kontakt kommenden Oberfläche erhöht, wobei eine mittlere Dicke der Schicht in einem Bereich zwischen 150 µm und 3µm liegt.

7. Schraubverbindungsanordnung nach einem der Ansprüche 3 bis 6 oder nach dem Oberbegriff von Anspruch 3, wobei der Schraubenkörper der Schraube (4) zum zumindest teil- oder bereichsweisen Einführen in ein Durchgangsloch (11) in mindestens ein Bauteil (2, 3) bestimmt ist, und wobei die Schraube (4) einen Schraubenkopf (6) aufweist,
**dadurch gekennzeichnet, dass**
der Scheibenkörper (10) der mindestens einen Unterlegscheibe, die im montierten Zustand der Schraubverbindungsanordnung mit dem Schraubenkopf (6) der Schraube (4) in Kontakt kommt, zumindest teil- oder bereichsweise mit einer Schicht (9), insbesondere Beschichtung, versehen ist, welche in tribologischer Weise einen Reibungskoeffizienten zwischen dem Bauteil (2, 3) und dem Scheibenkörper (10) der mindestens einen Unterlegscheibe erhöht, wobei eine mittlere Dicke der Schicht in einem Bereich zwischen 150 µm und 3µm liegt.

8. Schraubverbindungsanordnung nach einem der Ansprüche 3 bis 7,
wobei der Schraubenkopf (6) der Schraube (4) einen Drehantrieb mit einer Kontur aufweist, welche passend für einen Formschluss mit einem insbesondere als Schraubendreher, Schraubenschlüssel oder Bit ausgeführten Werkzeug ausgebildet ist.

9. Schraubverbindungsanordnung nach einem der Ansprüche 2 bis 8,
wobei die Schraubenmutter einen Drehantrieb mit einer Kontur aufweist, welche passend für einen Formschluss mit einem insbesondere als Schraubendreher, Schraubenschlüssel oder Bit ausgeführten Werkzeug ausgebildet ist; und/oder
wobei die insbesondere als Beschichtung und insbesondere als ein tribologisches System ausgeführte Schicht (9) ausgebildet ist, den Reibungskoeffizienten um mindestens 100%, vorzugsweise um mindestens 150% und noch bevorzugter um etwa 200% bis 300% zu erhöhen; und/oder
wobei die insbesondere als ein tribologisches System dienende Schicht (9) mindestens ein insbesondere als Abradent dienendes Schleifmittel aufweist, wobei das insbesondere als Abradent dienende Schleifmittel Hartstoffkörner vorzugsweise auf Grundlage natürlicher Kornwerkstoffe, insbesondere Flint, Quarz, Korund, Schmiergel, Granat und/oder Naturdiamant, und/oder auf Grundlage synthetischer Kornwerkstoffe, insbesondere Wolframkarbide, Nickelkarbide, Korunde, Siliciumcarbide, Chromoxide, kubisches Bornitrid, Aluminiumoxid und/oder Diamant, aufweist.

10. Schraubverbindungsanordnung nach einem der Ansprüche 1 bis 9, wobei die insbesondere als ein tribologisches System dienende Schicht (9) als ein Pulver, als eine Paste, insbesondere Einschleifpaste, oder als ein Matrix-System, insbesondere auf Epoxi-Basis, ausgeführt ist; und/oder wobei die insbesondere als tribologisches System ausgeführte Schicht (9) als ein in eine Matrix eingebetteter Verbundwerkstoff ausgebildet ist.

11. Schraubverbindungsanordnung nach einem der Ansprüche 1 bis 10, wobei die insbesondere als Beschichtung ausgeführte Schicht (9) durch Tauch-Schleudern, Spritzen, Tauch-Ziehen und/oder Aufpinseln aufgebracht ist.

12. Schraubverbindungsanordnung nach einem der Ansprüche 1 bis 11, wobei der Schraubenkörper und/oder der Scheibenkörper (10) der mindestens einen Unterlegscheibe und/oder der Mutterkörper (8) aus Metall, insbesondere Stahl, bevorzugt hochlegiertem Stahl, Messing, Aluminium und/oder Kupfer besteht.

13. System mit mindestens einem Bauteil (2, 3), in welchem ein Durchgang, insbesondere Durchgangsloch (11), ausgebildet ist, und mit einer Schraubverbindungsanordnung nach einem der Ansprüche 1 bis 12, wobei der Schraubenkörper der Schraube (4) zumindest teil- oder bereichsweise in dem Durchgangsloch (11) eingeführt ist, wobei das Bauteil (2, 3) vorzugsweise aus Metall, insbesondere Stahl, bevorzugt hochlegiertem Stahl, Messing, Aluminium und/oder Kupfer, oder aus einem Verbundwerkstoff, insbesondere mit einem Kunststoffmaterial, besteht.

14. Komposition, insbesondere in Gestalt eines Pulvers oder in Gestalt einer Paste, welche als ein tribologisches System zur Erhöhung eines Reibungskoeffizienten zwischen Komponenten einer Schraubverbindungsanordnung nach einem der Ansprüche 1 bis 12 und/oder zur Erhöhung eines Reibungskoeffizienten zwischen mindestens einer Komponente einer Schraubverbindungsanordnung nach einem der Ansprüche 1 bis 17 und einem Bauteil (2, 3) ausgebildet ist.

15. Komposition nach Anspruch 14,
wobei die Komposition mindestens ein als Abradent dienendes Schleifmittel aufweist, wobei das mindestens eine Schleifmittel Hartstoffkörner auf Grundlage natürlicher Kornwerkstoffe, insbesondere Flint, Quarz, Korund, Schmiergel, Granat und/oder Naturdiamant, und/oder auf Grundlage synthetischer Kornwerkstoffe, insbesondere Wolframkarbide, Nickelkarbide, Korunde, Siliciumcarbide, Chromoxide, kubische Bornitride, Aluminiumoxide und/oder Diamant, aufweist.
